# EUROPEAN PATENT APPLICATION

(11) **EP 4 636 710 A1**
(43) Date of publication of application: **22.10.2025**
(21) Application number: 23917907.0
(22) Date of filing: 19.12.2023
(51) Int. Cl.: G06V 10/98, G06V 20/40, G06V 10/774, G06N 20/20, H04N 17/02

(54) **ELECTRONIC DEVICE FOR DETECTING ERROR IN IMAGE FRAME AND OPERATION METHOD THEREFOR**

(30) Priority: 20.01.2023 KR 20230008646
(71) Applicant: Samsung Electronics Co., Ltd., Suwon-si, Gyeonggi-do 16677 (KR)
(72) Inventor: HO, Yoonjung, Suwon-si Gyeonggi-do 16677 (KR); KIM, Jihoon, Suwon-si Gyeonggi-do 16677 (KR); KIM, Haeseong, Suwon-si Gyeonggi-do 16677 (KR); PARK, Myoungdo, Suwon-si Gyeonggi-do 16677 (KR); KWON, Jaeook, Suwon-si Gyeonggi-do 16677 (KR); OH, Sukwon, Suwon-si Gyeonggi-do 16677 (KR); KANG, Byungkwon, Suwon-si Gyeonggi-do 16677 (KR)
(74) Representative: Walaski, Jan Filip
(86) International application number: PCT/KR2023/021006
(87) International publication number: WO 2024/154955

(57) **Abstract**

An electronic device is disclosed. An electronic device according to an embodiment of the present disclosure may: acquire data on a target frame via a memory, a communication unit, or an image input unit; acquire information on at least one candidate error region included in the target frame by using a first machine learning model trained to output information on an error region of a frame; based on the information on the at least one candidate error region, determine whether the target frame corresponds to a candidate error screen; based on the target frame being determined to correspond to a candidate error screen, perform object detection on the target frame to determine whether an object is detected in the target frame; based on an object being detected in the target frame, determine that the target frame is a normal screen; and based on at least one object not being detected in the target frame, determine that the target frame is an error screen. Various other embodiments identified through the specification are also possible.

## Description

### [Technical Field]

Embodiments of the disclosure relate to an electronic device for detecting an error in an image frame and a method for operating the same.

### [Background Art]

A display device (e.g., a TV or a monitor) that provides a real-time image may identify an error (e.g., screen artifacting) included in the image. For example, the display device may identify errors in the image by comparing it with a reference image that does not contain the error. Furthermore, for example, the display device may detect errors by using a preset machine learning model on real-time images without the need for a reference image.

Deep learning technology related to image recognition may be used to detect an error in an image. The deep learning technology related to image recognition may include the machine learning method known as "classification," which is used to determine whether an object is included in an image or video and may also include the machine learning method "object detection" which is capable of identifying the position of an object on an image in addition to determining whether the object is present in an image or video.

### [Disclosure of Invention]

### [Solution to Problems]

The machine learning model used to detect errors in images or videos may not provide high confidence for image data. This is due to the continuous input of data with varying characteristics in real-time image data, which may result in the input of frame data with low similarity to the screen learned by the machine learning model.

Embodiments of the disclosure provide a device for enhancing the confidence of image artifacting detection and an operation method thereof.

There are also provided a device and an operation method thereof, capable of high-confidence error detection by identifying a candidate error screen using a machine learning model for image quality score prediction and error area detection and identifying, once more, whether the identified candidate error screen is a normal screen through object detection.

An electronic device according to an embodiment of the disclosure may comprise memory, an image input unit, a communication unit, and at least one processor connected to the image input unit and the communication unit. In an embodiment, the at least one processor may obtain data regarding a target frame through the memory, the communication unit, or the image input unit. In an embodiment, the at least one processor may obtain information regarding at least one candidate error area included in the target frame using a first machine learning model trained to output information regarding an error area of a frame. In an embodiment, the at least one processor may determine whether the target frame corresponds to a candidate error screen based on the information regarding the at least one candidate error area. In an embodiment, the at least one processor may, when determining that the target frame corresponds to the candidate error screen, perform object detection on the target frame to determine whether an object is detected in the target frame. In an embodiment, the at least one processor may, based on the object being detected in the target frame, determine that the target frame is a normal screen. In an embodiment, the at least one processor may, based on at least one object not being detected in the target frame, determine that the target frame is an error screen.

In an embodiment, the at least one candidate error area may include a first candidate error area having a prediction confidence equal to or greater than a first value, and a second candidate error area having a prediction confidence less than the first value. The at least one processor may determine the target frame as the candidate error screen based on the number of the first candidate error areas exceeding a second value.

In an embodiment, the at least one processor may perform the object detection on the candidate error area.

In an embodiment, the at least one processor may perform the object detection on the first candidate error area.

In an embodiment, the at least one processor may obtain information regarding a quality score of the target frame using a second machine learning model trained to predict a quality score of an input image frame. In an embodiment, the at least one processor may determine whether to perform the object detection on the target frame based on the information regarding the quality score.

In an embodiment, the at least one processor may determine the target frame as the candidate error screen when a quality score value of the target frame is less than or equal to a third value.

In an embodiment, the at least one processor may perform the object detection on an entire area of the target frame based on determining the target frame as the candidate error screen using the first machine learning model and determining the target frame as the candidate error screen using the second machine learning model.

In an embodiment, the at least one processor may transmit information regarding the target frame to a content providing server based on the target frame being determined as the error screen.

In an embodiment, the information regarding the target frame may include information indicating a network state of the electronic device.

In an embodiment, the at least one processor may receive information regarding a third machine learning model for object detection from a network server, and perform the object detection using the third machine learning model.

A method of operating an electronic device according to an embodiment of the disclosure may comprise obtaining data regarding a target frame. In an embodiment, the method for operating the electronic device may comprise obtaining information regarding at least one candidate error area included in the target frame using a first machine learning model trained to output information regarding an error area of a frame.

In an embodiment, the method of operating the electronic device may comprise determining whether the target frame corresponds to a candidate error screen based on the information regarding the at least one candidate error area. In an embodiment, the method for operating the electronic device may comprise, based on determining that the target frame corresponds to the candidate error screen, performing object detection on the target frame to determine whether an object is detected in the target frame. In an embodiment, the method for operating the electronic device may comprise, based on the object being detected in the target frame, determining that the target frame is a normal screen. In an embodiment, the method for operating the electronic device may comprise, based on at least one object not being detected in the target frame, determining that the target frame is an error screen.

In an embodiment, the method of operating the electronic device may comprise determining the target frame as the candidate error screen based on the number of the first candidate error areas exceeding a second value. In an embodiment, the at least one candidate error area may include a first candidate error area having a prediction confidence equal to or greater than a first value, and a second candidate error area having a prediction confidence less than the first value.

In an embodiment, the method of operating the electronic device may comprise performing the object detection on the candidate error area.

In an embodiment, the method of operating the electronic device may comprise performing the object detection on the first candidate error area.

In an embodiment, the method of operating the electronic device may comprise obtaining information regarding a quality score of the target frame using a second machine learning model trained to predict a quality score of an input image frame.

In an embodiment, the method of operating the electronic device may comprise determining whether to perform the object detection on the target frame based on the information regarding the quality score.

In an embodiment, the method of operating the electronic device may comprise determining the target frame as the candidate error screen based on a quality score value of the target frame is less than or equal to a third value.

In an embodiment, the method of operating the electronic device may comprise performing the object detection on an entire area of the target frame based on determining the target frame as the candidate error screen using the first machine learning model and determining the target frame as the candidate error screen using the second machine learning model.

In an embodiment, the method of operating the electronic device may comprise transmitting information regarding the target frame to a content providing server based on the target frame being determined as the error screen.

In an embodiment, in the method of operating the electronic device, the information regarding the target frame may include information indicating a network state of the electronic device.

In an embodiment, the method of operating the electronic device may comprise receiving information regarding a third machine learning model for object detection from a network server. In an embodiment, the method for operating the electronic device may comprise performing the object detection using the third machine learning model.

According to the examples disclosed in the disclosure, an electronic device may perform high-confidence error detection on image frames.

It is also possible to enhance the accuracy of error detection by identifying a candidate error screen and performing object detection on the identified candidate error screen once more.

Effects obtainable from the disclosure are not limited to the above-mentioned effects, and other effects not mentioned may be apparent to one of ordinary skill in the art from the following description.

### [Brief Description of Drawings]

FIG. 1 is a block diagram illustrating a configuration of an electronic device according to an embodiment;
FIG. 2 illustrates a block diagram for determining an error screen of an electronic device according to an embodiment;
FIG. 3 illustrates an operation flow of an electronic device according to an embodiment;
FIG. 4A illustrates an example of image quality score prediction through a machine learning model according to an embodiment;
FIG. 4B illustrates an example of image quality score prediction through a machine learning model according to an embodiment;
FIG. 5A illustrates an example of error area prediction through a machine learning model according to an embodiment; and
FIG. 5B illustrates an example of error area prediction through a machine learning model according to an embodiment.

In connection with the description of the drawings, the same or similar reference numerals may be used to denote the same or similar elements.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description may be made of well-known functions and configurations in the drawings and relevant descriptions.

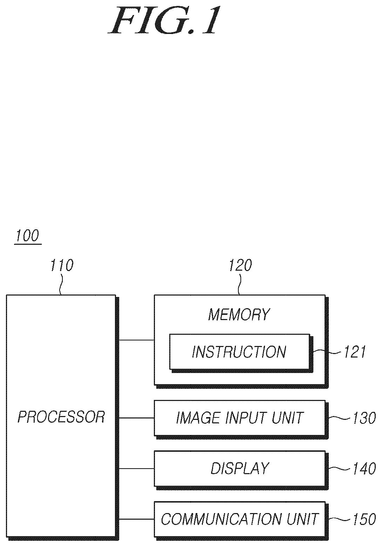

FIG. 1 is a block diagram illustrating a configuration of an electronic device according to an embodiment. The electronic device 100 may be wearable terminals, such as watches and glasses, capable of performing various computing functions, such as video watching and communication. The electronic device 100 may be various types of terminals without being limited to the above examples.

According to an embodiment, the memory 120 is a storage medium used by the electronic device 100 and may store data, such as at least one command 121 or configuration information corresponding to at least one program. The program may include an operating system (OS) program and various application programs.

In an embodiment, the memory 120 may store pairing information about an external electronic device located adjacent to the electronic device 100. In an embodiment, the pairing information may include, e.g., device information about the external electronic device, information about another external electronic device or remote control device paired with the external electronic device, information about a scheme (e.g., Bluetooth or Wi-Fi) in which the external electronic device and the other external electronic device or remote control device are paired with each other, and information about a pairing history between the external electronic device and the other external electronic device or remote control device.

In an embodiment, the storage unit 120 may include at least one type of storage medium of flash memory types, hard disk types, multimedia card micro types, card types of memories (e.g., SD or XD memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

According to an embodiment, the image input unit 130 may receive images and image information through a tuner (not shown), an input/output unit (not shown), or the communication unit 150. The image input unit 130 may include at least one of the tuner and the input/output unit. The tuner may tune and select only the frequency of the broadcast channel to be received by the electronic device 100 among many radio components, by amplifying, mixing, and resonating the broadcast signals wiredly/wirelessly received. The broadcast signal may include video, audio, and additional data (e.g., electronic program guide (EPG)). The tuner may receive real-time broadcast channels (or real-time viewing images) from various broadcast sources, such as terrestrial broadcasts, cable broadcasts, satellite broadcasts, Internet broadcasts, and the like. The tuner may be implemented integrally with the electronic device 100 or may be implemented as a separate tuner electrically connected to the electronic device 100. The input/output unit may include at least one of a high definition multimedia interface (HDMI) input port, a component input jack, a PC input port, and a USB input jack capable of receiving an image and image information from an external device of the electronic device 100 under the control of the processor 110. It is obvious to one of ordinary skill in the art that the input/output unit may be added, deleted, and/or changed according to the performance and structure of the electronic device 100.

According to an embodiment, the display 140 may perform functions for outputting information in the form of numbers, characters, images, and/or graphics. The display 140 may include at least one hardware module for output. The at least one hardware module may include at least one of, e.g., a liquid crystal display (LCD), a light emitting diode (LED), a light emitting polymer display (LPD), an organic light emitting diode (OLED), an active matrix organic light emitting diode (AMOLED), or flexible LED (FLED). The display 140 may display a screen corresponding to data received from the processor 110. The display 140 may be referred to as an 'output unit', a 'display unit', or by other terms having an equivalent technical meaning.

According to an embodiment, the communication unit 150 may provide a wired/wireless communication interface enabling communication with an external device. The communication unit 150 may include at least one of a wired Ethernet, a wireless LAN communication unit, and a short-range communication unit. The wireless LAN communication unit may include, e.g., Wi-Fi, and may support the wireless LAN standard (IEEE802.11x) of the institute of electrical and electronics engineers (IEEE). The wireless LAN communication unit may be wirelessly connected to an access point (AP) under the control of the processor 110. The short-range communication unit may perform short-range communication wirelessly with an external device under the control of the processor 110. Short-range communication may include Bluetooth, Bluetooth low energy, infrared data association (IrDA), ultra-wideband (UWB), and near-field communication (NFC). The external device may include a server device and a mobile terminal (e.g., phone, tablet, etc.) providing, e.g., a video service.

According to an embodiment, the processor 110 may control at least one other component of the electronic device 100 and/or execute computation or data processing regarding communication by executing at least one command 121 stored in the memory 120. The processor 110 may include at least one of a central processing unit (CPU), a graphic processing unit (GPU), a micro controller unit (MCU), a sensor hub, a supplementary processor, a communication processor, an application processor, an application specific integrated circuit (ASIC), or field programmable gate arrays (FPGA) and may have multiple cores.

In an embodiment, the processor 110 may execute, e.g., software to control at least one other component (e.g., a hardware or software component) of the electronic device 100 connected with the processor 110 and may process or compute various data. According to one embodiment, as at least part of the data processing or computation, the processor 110 may store a command or data received from another component onto a volatile memory, process the command or the data stored in the volatile memory, and store resulting data in a non-volatile memory. According to an embodiment, the processor 110 may include a main processor (e.g., a central processing unit (CPU) or an application processor (AP)), or an auxiliary processor (e.g., a graphics processing unit (GPU), a neural processing unit (NPU), an image signal processor (ISP), a sensor hub processor, or a communication processor (CP)) that is operable independently from, or in conjunction with, the main processor. For example, when the electronic device 100 includes the main processor and the auxiliary processor, the auxiliary processor may be configured to use lower power than the main processor or to be specified for a designated function. The auxiliary processor may be implemented separately from, or as part of, the main processor.

In an embodiment, the auxiliary processor may control at least some of functions or states related to at least one component of the electronic device 100, instead of the main processor while the main processor is in an inactive (e.g., sleep) state or along with the main processor while the main processor is an active state (e.g., executing an application). According to an embodiment, the auxiliary processor (e.g., the neural processing unit) may include a hardware structure specified for artificial intelligence model processing. The artificial intelligence model may be generated via machine learning. Such learning may be performed, e.g., by the electronic device 100 where the artificial intelligence model is performed or via a separate server. Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. In addition to the hardware structure, the artificial intelligence model may additionally or alternatively include a software structure.

In an embodiment, the processor may obtain image frame data from at least one of the memory 120, the image input unit 130, or the communication unit 150. The image frame data may mean data regarding a frame constituting an image. For example, the image frame data may be stored in the memory 120 (e.g., an image recorded and stored). For example, the image frame data may be obtained from the communication unit 150 or the image input unit 130 (e.g., real-time streaming image).

In the following description, it is assumed that the electronic device 100 is a display device such as a TV, but embodiments of the disclosure may be equally applied to other electronic devices, e.g., a server device, than the display device.

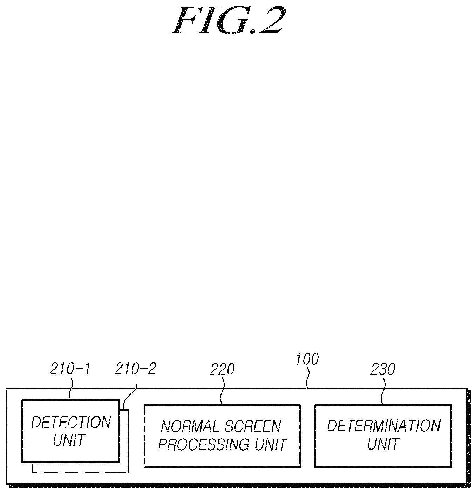

FIG. 2 is a block diagram illustrating an electronic device according to an embodiment. The block components of the electronic device 100 illustrated in FIG. 2 may include some or all of the block components of the electronic device 100 illustrated in FIG. 1.

According to an embodiment, the electronic device 100 may include detection units 210-1 and 210-2, a normal screen processing unit 220, and a determination unit 230.

In an embodiment, the detection units 210-1 and 210-2 may determine whether the input image frame is a candidate error screen. The candidate error screen may mean a frame primarily determined by the electronic device as an error screen before determining whether the input image frame finally corresponds to an error screen.

In an embodiment, when it is determined by the detection unit 210-1 or the detection unit 210-2 that the image frame data includes an error (e.g., screen artifacting), the detection unit 210-1 or the detection unit 210-2 may determine the image frame data as a candidate error screen.

In an embodiment, the detection unit 210-1 may determine whether the image frame data corresponds to the candidate error screen using a first machine learning model. The first machine learning model may be referred to as an "object detection model".

In an embodiment, the detection unit 210-1 may generate information about an area (hereinafter, referred to as a "candidate error area") predicted to have an error for the image frame using the first machine learning model. For example, the detection unit 210-1 may include information regarding the position of the error area and information regarding the prediction confidence of the candidate error area using the first machine learning model. The information regarding the prediction confidence of the candidate error area may be generated based on training data of the first machine learning model. The first machine learning model may be trained to be proportional to the probability that the error area is present in the candidate error area to give a reliability value. The reliability value may be represented as the prediction confidence.

In an embodiment, the detection unit 210-1 may determine the input image frame as a candidate error screen when the number of error areas having a prediction confidence larger than or equal to a first value for the input image frame exceeds a second value. The first value and the second value may be values preset and stored in the memory 120.

In an embodiment, the first machine learning model may perform learning based on error frames and definition data on the error areas included in the error frames.

In an embodiment, the error frames may include not only error frames in which an actual error occurs, but also frames in which an error occurs in a specific area of a normal frame. For example, unlike normal objects such as buses and people, error areas in the frame may not have a regular shape (e.g., polygon, circle, etc.). Therefore, for accurate learning, the electronic device 100 may perform learning on the error frame based on the training data generated in a manner to add a rectangular error piece to the normal screen. Training data for error frames may correspond to various error circumstances by generating different error sizes, numbers, and duplication, but are not limited thereto.

In an embodiment, the detection unit 210-2 may determine whether the image frame data corresponds to the candidate error screen using a second machine learning model. The second machine learning model may be referred to as an "image quality assessment model".

In an embodiment, the second machine learning model may generate information regarding the image quality score by predicting the image quality score for the image frame. The detection unit 210-2 may determine the image frame as the candidate error frame based on the information regarding the image quality score.

In an embodiment, the second machine learning model may use data regarding the error frame, data regarding the normal frame, and data regarding the image quality score as training data.

In an embodiment, the electronic device 100 may assign a weight to the image quality score of the frame in relation to training of the second machine learning model. The electronic device 100 may assign a higher weight to a lower image quality score for an error frame, and may assign a higher weight to a higher image quality score for a normal frame.

In an embodiment, the second machine learning model may receive frame data and output information regarding the image quality score.

In an embodiment, the information regarding the image quality score may mean information regarding the image quality score given to the frame. The information regarding the image quality score may mean one value determined based on features extracted by the second machine learning model from the frame data.

In an embodiment, when the first machine learning model and the second machine learning model are trained by a server communicating with the electronic device 100 rather than the electronic device 100, the electronic device 100 may receive information regarding the first machine learning model and the second machine learning model from the server.

In an embodiment, the normal screen processing unit 220 may mean a component for excluding incorrectly determined cases from among the cases detected by the detection units 210-1 and 210-2. The determination unit 230 may identify whether there is a normal object in the frame using the object detection model (different from the first machine learning model and the second machine learning model). When the electronic device determines that the frame is a candidate error screen using both the detection unit 210-1 and the detection unit 210-2, when an object is detected in the error area predicted through the first machine learning model 210-1, since the screen is highly likely to be a normal screen, the normal screen processing unit 220 may determine that the target frame is not an error screen.

In an embodiment, the machine learning model used by the normal screen processing unit 220 for object detection may be received from the server through the communication unit 250.

In an embodiment, the normal screen processing unit 220 may perform object detection on the frame determined by the detection unit 210-1 and the detection unit 210-2 as the candidate error screen.

In an embodiment, the normal screen processing unit 220 may determine whether an object is detected in the frame by performing object detection on the frame determined as the candidate error screen.

In an embodiment, the normal screen processing unit 220 may perform object detection on the entire area or a partial area of the frame determined as the candidate error screen. For example, for a candidate error screen determined as the candidate error screen using the first machine learning model by the detection unit 210-1, the electronic device 100 may perform object detection only on the error area. For example, for the candidate error screen determined as the candidate error screen using the second machine learning model by the detection unit 210-2, the electronic device 100 may perform object detection on the entire area.

In an embodiment, the determination unit 230 may determine that the image frame is a normal screen when an object is detected as a result of performing object detection on the candidate error screen through the normal screen processing unit 220.

In an embodiment, as a result of performing object detection on the candidate error screen through the normal screen processing unit 220, when no object is detected, the determination unit 230 may determine that the image frame is an error screen.

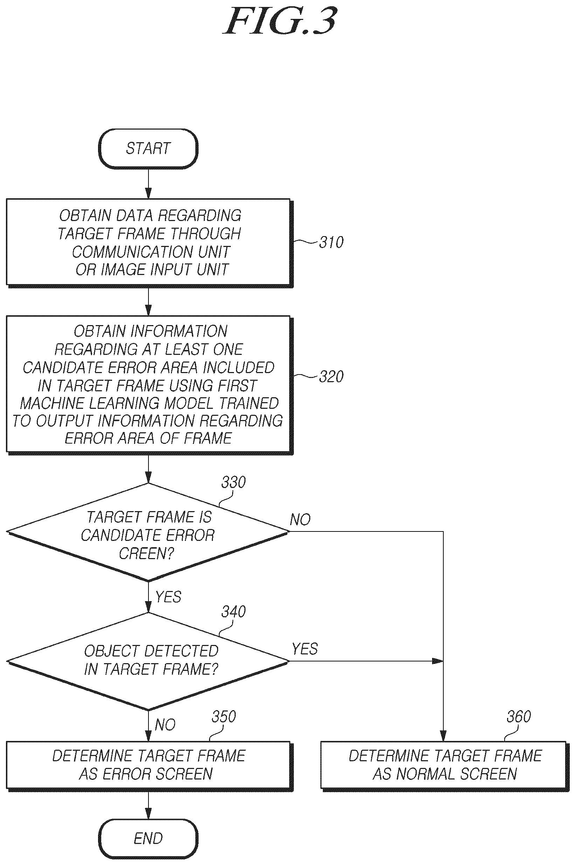

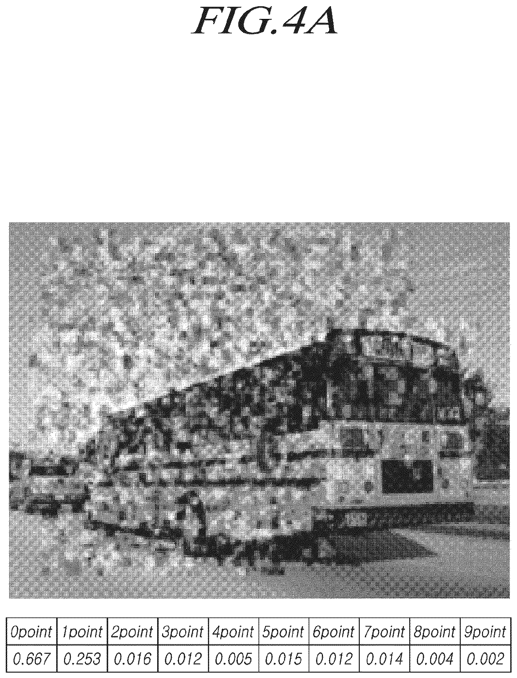

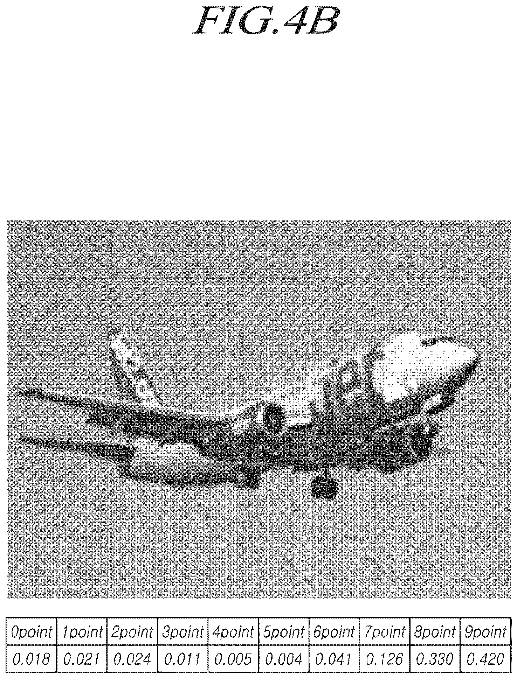

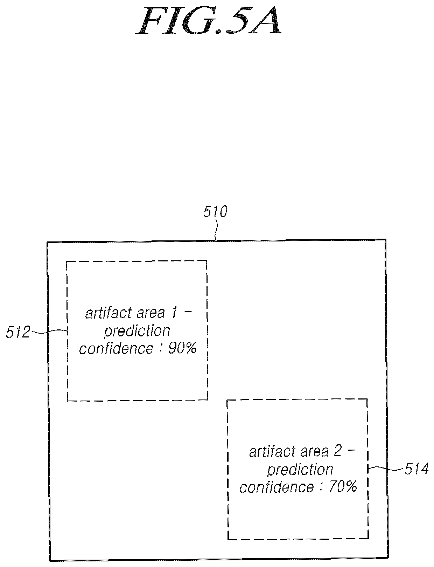

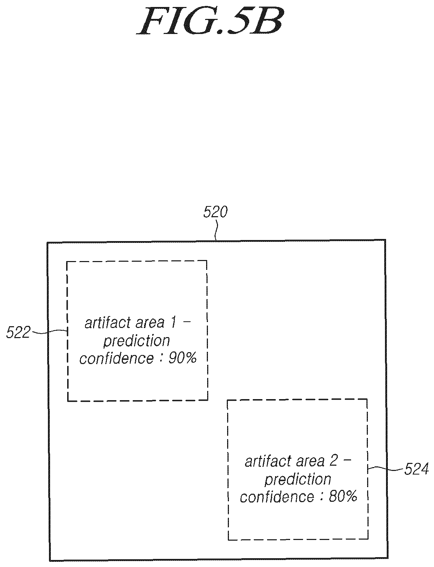

FIG. 3 illustrates an operation flow of an electronic device according to an embodiment. FIG. 4A illustrates an example of image quality score prediction through a machine learning model according to an embodiment. FIG. 4B illustrates an example of image quality score prediction through a machine learning model according to an embodiment. FIG. 5A illustrates an example of error area prediction through a machine learning model according to an embodiment. FIG. 5B illustrates an example of error area prediction through a machine learning model according to an embodiment. The electronic device of FIGS. 3, 4A, 4B, 5A, and 5B may include the electronic device 100 of FIGS. 1 and 2. In the description of FIGS. 3, 4A, 4B, 5A, and 5B, descriptions may be omitted for portions that are redundant with those described in FIGS. 1 and 2 or for content that a person of ordinary skill in the art of the present invention may readily understand or predict.

According to an embodiment, in operation 310, the electronic device 100 may obtain data regarding the target frame through a communication unit, memory, or an image input unit. The target frame may mean a frame for determining whether it is an error screen. The target frame may mean any one frame among the frames of the image frame.

In an embodiment, the data regarding the target frame obtained from the communication unit may include data regarding a real-time streaming image.

In an embodiment, the data regarding the target frame obtained from the image input unit may include data regarding a real-time streaming image and a recorded image.

In an embodiment, the data regarding the target frame obtained from the memory may include image data received from a server or a broadcaster and stored in the memory.

According to an embodiment, in operation 320, the electronic device may obtain information regarding at least one candidate error area included in a target frame using a first learning model trained to output information regarding the error area of the frame.

In an embodiment, the first learning model may correspond to a first machine learning model used by the detection unit 210-1 of FIG. 2.

In an embodiment, the error area may include an area in which an error such as screen artifacting occurs.

In an embodiment, the target frame may include at least one error area.

In an embodiment, the information regarding the at least one candidate error area may include information regarding the position of each of the at least one candidate error area and information regarding the prediction confidence of each error area.

According to an embodiment, in operation 330, the electronic device may determine whether the target frame corresponds to the candidate error screen based on the information regarding the at least one candidate error area.

In an embodiment, the prediction confidence may be identified for each of the at least one candidate error area and, when the number of candidate error areas (first candidate error areas) having a prediction confidence larger than or equal to a first value is larger than or equal to a second value, the target frame may be determined as the candidate error screen. Hereinafter, an example of a process of determining that the target frame is the candidate error screen is illustrated in FIGS. 5A and 5B and, in the description, it is assumed that the first value is 80% and the second value is two.

Referring to FIG. 5A, the electronic device may identify a candidate error area 512 and a candidate error area 514 using the first learning model for the first target frame 510. The prediction confidence of the candidate error area 512 may be 90%, and the prediction confidence of the candidate error area 514 may be 70%. Since there is only one, i.e., not more than two, first candidate error area having a prediction confidence exceeding 80%, as the candidate error area 512, the electronic device may determine that the first target frame 512 is not a candidate error screen. Referring to FIG. 5B, the electronic device may identify a candidate error area 522 and a candidate error area 524 using the first learning model for the second target frame 520. The prediction confidence of the candidate error area 522 may be 90%, and the prediction confidence of the candidate error area 524 may be 80%. Since the electronic device has two candidate error areas having a prediction confidence of 80% or more as the candidate error area 522 and the candidate error area 524, the second target frame 520 may be determined as a candidate error screen.

According to an embodiment, in operation 330, when the electronic device determines that the target frame corresponds to the candidate error screen, the electronic device may perform operation 340. According to an embodiment, in operation 330, when the electronic device determines that the target frame is not the candidate error screen, the electronic device may perform operation 360.

In an embodiment, although not illustrated in the drawings, the electronic device may determine whether the target frame corresponds to the candidate error screen using the second machine learning model. The second machine learning model may include the second machine learning model of the detection unit 210-2 of FIG. 2.

In an embodiment, the electronic device may determine whether the target frame corresponds to the candidate error screen based on the image quality prediction score information for the target frame obtained through the second machine learning model.

In an embodiment, when the image quality score value of the target frame is smaller than or equal to a third value, the electronic device may determine the target frame as the candidate error screen.

In an embodiment, when the target frame is determined as the candidate error screen by at least one of the first machine learning model and the second machine learning model, the electronic device may perform operation 340.

According to an embodiment, in operation 340, the electronic device may determine whether an object is detected in the target frame. In an embodiment, the electronic device may determine whether an object is detected in the target frame by performing object detection on the target frame. For example, the electronic device may use an artificial intelligence algorithm (different from the first and second machine learning models) for object detection on the target frame to determine whether an object is detected in the target frame. The object may refer to a subject except for the background area included in the image or video, such as a person, an object, or an animal.

In an embodiment, when the electronic device determines that the target frame is the candidate error screen through the first machine learning model, the electronic device may perform object detection on the candidate error area. For example, when the electronic device determines that the target frame is the candidate error screen through the first machine learning model, the electronic device may perform object detection on the first candidate error area with a prediction confidence larger than or equal to the first value.

In an embodiment, when the electronic device determines that the target frame is the candidate error screen through the second machine learning model, the electronic device may perform object detection on the entire area.

In an embodiment, although not illustrated in the drawings, when the electronic device determines that the target frame is the candidate error screen through both the first machine learning model and the second machine learning model, the electronic device may perform object detection on the candidate error area.

In an embodiment, when the object is detected in the target frame, the electronic device may determine that the target frame is a normal screen in operation 360.

In an embodiment, when the object is not detected in the target frame, operation 350 may be performed.

According to an embodiment, in operation 350, the electronic device may determine that the target frame is an error screen.

In an embodiment, when the electronic device determines that the target frame is an error screen, the electronic device may transmit information regarding the target frame to a server that manages the electronic device. The information regarding the target frame may include information regarding a log, an image, and an operation sequence of the target frame. For example, when the electronic device determines that the target frame is an error screen, the electronic device may transmit information indicating that the current network condition is poor to the network server that transmits the image data. Based on the information, the path through which the content providing server transmits data may be changed, or the network settings may be changed.

The electronic device according to various embodiments of the disclosure may be one of various types of electronic devices. The electronic devices may include, for example, a display device, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the server device (not shown) described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
memory;
an image input unit;
a communication unit; and
at least one processor connected to the image input unit and the communication unit, wherein the at least one processor:
obtains data regarding a target frame through the memory, the communication unit, or the image input unit;
obtains information regarding at least one candidate error area included in the target frame using a first machine learning model trained to output information regarding an error area of a frame;
determines whether the target frame corresponds to a candidate error screen based on the information regarding the at least one candidate error area;
based on determining that the target frame corresponds to the candidate error screen, performs object detection on the target frame to determine whether an object is detected in the target frame;
based on the object being detected in the target frame, determines that the target frame is a normal screen; and
based on at least one object not being detected in the target frame, determines that the target frame is an error screen.

2. The electronic device of claim 1, wherein the at least one candidate error area includes a first candidate error area having a prediction confidence equal to or greater than a first value, and a second candidate error area having a prediction confidence less than the first value, and
wherein the at least one processor determines the target frame as the candidate error screen based on the number of the first candidate error areas exceeding a second value.

3. The electronic device of claim 1 or 2, wherein the at least one processor performs the object detection on the candidate error area.

4. The electronic device of claim 2, wherein the at least one processor performs the object detection on the first candidate error area.

5. The electronic device of any one of claims 1 to 4, wherein the at least one processor:
obtains information regarding a quality score of the target frame using a second machine learning model trained to predict a quality score of an input image frame; and
determines whether to perform the object detection on the target frame based on the information regarding the quality score.

6. The electronic device of claim 5, wherein the at least one processor determines the target frame as the candidate error screen based on a quality score value of the target frame is less than or equal to a third value.

7. The electronic device of claim 6, wherein the at least one processor performs the object detection on an entire area of the target frame based on determining the target frame as the candidate error screen using the first machine learning model and determining the target frame as the candidate error screen using the second machine learning model.

8. The electronic device of any one of claims 1 to 7, wherein the at least one processor transmits information regarding the target frame to a content providing server based on the target frame being determined as the error screen.

9. The electronic device of claim 7, wherein the information regarding the target frame includes information indicating a network state of the electronic device.

10. The electronic device of any one of claims 1 to 9, wherein the at least one processor:
receives information regarding a third machine learning model for object detection from a network server; and
performs the object detection using the third machine learning model.

11. A method of operating an electronic device, the method comprising:
obtaining data regarding a target frame;
obtaining information regarding at least one candidate error area included in the target frame using a first machine learning model trained to output information regarding an error area of a frame;
determining whether the target frame corresponds to a candidate error screen based on the information regarding the at least one candidate error area;
in response to determining that the target frame corresponds to the candidate error screen, performing object detection on the target frame to determine whether an object is detected in the target frame;
in response to the object being detected in the target frame, determining that the target frame is a normal screen; and
in response to at least one object not being detected in the target frame, determining that the target frame is an error screen.

12. The method of claim 11, comprising determining the target frame as the candidate error screen in response to the number of the first candidate error areas exceeding a second value, wherein the at least one candidate error area includes a first candidate error area having a prediction confidence equal to or greater than a first value, and a second candidate error area having a prediction confidence less than the first value.

13. The method of claim 11 or 12, comprising performing the object detection on the candidate error area.

14. The method of claim 12, comprising performing the object detection on the first candidate error area.

15. The method of any one of claims 11 to 14, comprising:
obtaining information regarding a quality score of the target frame using a second machine learning model trained to predict a quality score of an input image frame; and
determining whether to perform the object detection on the target frame based on the information regarding the quality score.
